# EUROPEAN PATENT APPLICATION

(11) **EP 4 707 313 A1**
(43) Date of publication of application: **11.03.2026**
(21) Application number: 25193966.6
(22) Date of filing: 05.08.2025
(51) Int. Cl.: C08F 212/14, C09D 125/18, H01M 10/0565

(54) **POLYMER ELECTROLYTE, SECONDARY BATTERY AND ELECTRICAL DEVICE**

(30) Priority: 03.09.2024 CN 202411230196
(71) Applicant: AESC Japan Ltd., Yokohama-Shi, Kanagawa 220-0012 (JP)
(72) Inventor: YU, Le, Pudong New Area Shanghai, 201315 (CN); QU, Xinxin, Pudong New Area Shanghai, 201315 (CN)
(74) Representative: Becker, Eberhard

(57) **Abstract**

Disclosed is a polymer electrolyte, including: a polymer substrate; and a copolymer, wherein the polymer substrate includes a support material, and the copolymer contains cyano groups, ester groups, and sulfonic acid groups. In the present disclosure, the polymer substrate serves as a support material to provide a mechanical strength, and the function of the copolymer is to form a stable interface with positive electrodes and negative electrodes. Furthermore, the copolymer contains cyano groups, ester groups, and sulfonic acid groups, all of which are polar groups that enable improvement of the mechanical properties of the electrolyte, while having high a reduction resistance and an oxidation resistance, enabling formation of a stable SEI film with the negative electrodes and a stable CEI film with the positive electrodes, which may enable the prepared secondary battery to have a high energy density and to be able to operate cycles in the long term.

## Description

### BACKGROUND

### Field of the Disclosure

The present disclosure relates to the field of batteries, and specifically relates to a polymer electrolyte, a secondary battery and an electrical device.

### Description of Related Art

In the sector of new energy, battery performance is now a critical part of the technology. Compared to lithium-ion batteries (LIBs), lithium metal batteries (LMBs) based on liquid electrolytes have higher energy density. However, internal short circuits caused by lithium dendrite growth present serious safety hazards. LMBs based on solid electrolytes exhibit high energy density and enhanced safety, but suffer from low ionic conductivity, poor interfacial contact and other issues. Gel polymer electrolytes have received a lot of attention due to improved safety performance, reduced interfacial impedance between solid electrolytes and electrodes, and compatibility with "roll-to-roll" LMB manufacturing processes. In the meantime, lithium-rich manganese-based oxides (LRMO) demonstrate advantages of high capacity, high voltage, and low cost, and are considered highly promising for pairing with lithium metal to fabricate batteries with ultra-high energy density. Nevertheless, the poor interfacial performance between LRMO and electrolytes impedes practical application thereof, necessitating the development of novel polymer electrolytes.

It is evident that the related art suffers from the following deficiencies: lithium-ion batteries exhibit low energy density, necessitating the matching with lithium metal and lithium-rich manganese-based oxides. Furthermore, liquid batteries present safety hazards, and the interfacial performance between inorganic electrolytes and electrodes limits practical applications thereof. Besides, they are incompatible with current manufacturing processes. Therefore, there is an urgent need to develop corresponding polymer electrolytes.

### SUMMARY OF THE DISCLOSURE

The present disclosure realizes simultaneous matching with lithium metal and lithium-rich manganese-based batteries through a structural design of a polymer electrolyte, thus achieving high energy density of batteries.

Some embodiments of the present disclosure provide a polymer electrolyte, including: a polymer substrate; and a copolymer, wherein the polymer substrate includes a support material, and the copolymer contains cyano groups, ester groups and sulfonic acid groups. In the present disclosure, the polymer substrate (A) serves as a support material to provide a mechanical strength, and the function of the copolymer (B) is to form a stable interface between positive electrodes and negative electrodes. In view of the above, it may be obtained that the copolymer (B) is formed by copolymerization of three types of monomers, containing cyano groups, ester groups, and sulfonic acid groups respectively, all of which are polar groups that enable improvement of the mechanical properties of the electrolyte, while having a high reduction resistance and an oxidation resistance, thus enabling formation of a stable SEI film (solid electrolyte interface film) with the negative electrodes and formation of a stable CEI film (cathode electrolyte interface film) with the positive electrodes, as well as enabling simultaneous matching with lithium metal negative electrodes and lithium-rich manganese-based oxides. In this way, it is possible to prepare secondary batteries with a high energy density and able to operate cycles in the long term.

In some embodiments, a mass ratio of the polymer substrate to the copolymer is in a range of 10:90 to 90: 10, optionally the mass ratio is 30:70. Within this range, the polymer substrate (A) may provide sufficient mechanical properties. The copolymer (B) has stable interfaces with both the positive electrodes and the negative electrodes and may provide additional kinetics, which is beneficial for capacity performance.

In some embodiments, the copolymer is formed by copolymerization of acrylonitrile (AN), lithium p-styrenesulfonate (LiSS) and vinylene carbonate (VC). A molar ratio of monomers of the acrylonitrile (AN), the lithium p-styrenesulfonate (LiSS) and the vinylene carbonate (VC) is 5-25:50-90:5-25. Optionally, a molar ratio of the monomers of the acrylonitrile (AN) to the vinylene carbonate (VC) is equal. Optionally, a molar ratio of the monomers of the acrylonitrile (AN), the lithium p-styrenesulfonate (LiSS) and the vinylene carbonate (VC) is 20:60:20. In the present disclosure, the acrylonitrile (AN) has polar functional groups and has a high voltage stability. The vinylene carbonate (VC) is stable with lithium metal and enables formation of a stable SEI. The lithium p-styrenesulfonate (LiSS) has an additional lithium-ion source and may provide additional kinetics to further improve a rate performance of the battery.

In some embodiments, the polymer substrate is selected from any one or more of polyvinylidene fluoride (PVDF), vinylidene fluoride-hexafluoropropylene (PVDF-HFP), PVDF-HFP-PTFE (fluoro-rubber), polyimide (PI), and polymethyl methacrylate (PMMA).

Other embodiments of the present disclosure provide a secondary battery, characterized by including a positive electrode sheet, a negative electrode sheet and an electrolyte layer, wherein the electrolyte layer includes the above-mentioned polymer electrolyte.

Still other embodiments of the present disclosure provide an electrical device, characterized by including the above-mentioned secondary battery.

Through a structural design of the polymer electrolyte, by using different polymer substrates as support materials and copolymers formed by copolymerization of different monomers and by regulating a composition and a ratio, it is possible to realize matching with lithium metal and LRMO to achieve 500Wh/kg energy density and stable 500 cycles in the long term.

### DESCRIPTION OF EMBODIMENTS

The present disclosure achieves structural design of a polymer electrolyte containing two types of polymers, specifically including a polymer substrate (A) and a copolymer (B), wherein the polymer substrate (A) includes a support material, and the copolymer (B) contains cyano groups, ester groups, and sulfonic acid groups. In the present disclosure, the polymer substrate (A) serves as a support material to provide a mechanical strength, and the function of the copolymer (B) is to form stable interfaces with positive electrodes and negative electrodes. In view of the above, it may be obtained that the copolymer (B) is formed by copolymerization of three types of monomers, containing cyano groups, ester groups, and sulfonic acid groups respectively, all of which are polar groups that enable improvement of the mechanical properties of the electrolyte, while having a high reduction resistance and an oxidation resistance, thus enabling formation of a stable SEI film (solid electrolyte interface film) with the negative electrodes and formation of a stable CEI film (cathode electrolyte interface film) with the positive electrodes, as well as enabling simultaneous matching with lithium metal negative electrodes and lithium-rich manganese-based oxides. In this way, it is possible to prepare secondary batteries with a high energy density up to 500Wh/kg and able to operate cycles in the long term.

In some embodiments, a mass ratio of the polymer substrate (A) to the copolymer (B) is in a range of 10:90 to 90:10, optionally the mass ratio is 30:70. Within this range, the polymer substrate (A) may provide sufficient mechanical properties. The copolymer (B) has stable interfaces with both the positive electrodes and the negative electrodes, and may provide additional kinetics, which is beneficial for capacity performance.

In some embodiments, the polymer substrate (A) includes commercially available polymers, including but not limited to fluorine-containing polymers such as polyvinylidene fluoride (PVDF), vinylidene fluoride-hexafluoropropylene (PVDF-HFP), PVDF-HFP-PTFE (fluoro-rubber), and the like, as well as fluorine-free polymers such as polyimide (PI), polymethyl methacrylate (PMMA), and the like.

In some embodiments, the copolymer is formed by copolymerization of acrylonitrile (AN), lithium p-styrenesulfonate (LiSS) and vinylene carbonate (VC), wherein the polymerization method may be radical polymerization, including simple radical polymerization, atom transfer radical polymerization, reversible addition-fragmentation chain transfer polymerization, etc. In the present disclosure, the acrylonitrile (AN) has polar functional groups and has a high voltage stability. The vinylene carbonate (VC) is stable with lithium metal and enables formation of a stable SEI. The lithium p-styrenesulfonate (LiSS) has an additional lithium-ion source and may provide additional kinetics to further improve a rate performance of the battery.

Specifically, a molar ratio of monomers of the acrylonitrile (AN), the lithium p-styrenesulfonate (LiSS) and the vinylene carbonate (VC) is 5-25:50-90:5-25, optionally the molar ratio is 20:60:20. Within this range, it may be ensured that the overall ionic conductivity of the electrolyte layer is high, and the cycle performance and capacity of the battery are improved. In the present disclosure, the molar ratio of the monomers of the acrylonitrile (AN) to the vinylene carbonate (VC) is equal, and in this case, stable interfaces may be formed with both the positive electrodes and the negative electrodes, thereby improving the stability of the battery.

In addition, some embodiments of the present disclosure also provide a method for preparing the above polymer electrolyte, including the following steps:

The polymer substrate (A) includes commercially available polymers, including but not limited to fluorine-containing polymers such as polyvinylidene fluoride (PVDF), vinylidene fluoride-hexafluoropropylene (PVDF-HFP), PVDF-HFP-PTFE (fluoro-rubber), and the like, as well as fluorine-free polymers such as polyimide (PI), polymethyl methacrylate (PMMA), and the like.

The copolymer (B) is synthesized as follows. The acrylonitrile (AN), the lithium p-styrenesulfonate (LiSS) and the vinylene carbonate (VC) are mixed and dissolved in a specific amount of a solvent (such as dimethyl sulfoxide), then 0.1wt% of azobisisobutyronitrile (AIBN) is dissolved in the mixture. The obtained solution is kept at 60°C for 15 hours under an argon atmosphere. The obtained solid is dissolved in anhydrous dimethyl sulfoxide and washed with toluene to remove residual monomers and an initiator to obtain a pure copolymer. The molar ratio of the monomers of the AN, the LiSS and the VC is 5-25:50-90:5-25. Optionally, the molar ratio of the monomers of the AN to the VC is equal. Optionally, the molar ratio of the monomers of the AN, the LiSS and the VC is 20:60:20. In some embodiments, the above solvent may include polar solvents such as dimethyl sulfoxide (DMSO), N,N-dimethylformamide, etc. In some specific embodiments, the solvent may be DMSO, and a mass fraction of the polymer solution may be 10%.

Preparation of polymer: The polymer substrate (A) is mixed with the copolymer (B) in the solvent (DMSO). After sufficient heating and stirring to dissolve the mixture, the obtained solution is poured into a mold and dried to obtain a polymer film. Alternatively, the polymer film may be obtained by electrospinning the polymer substrate (A), pouring the solution of the copolymer (B) onto the polymer substrate (A) for drying to form a film, wherein the mass ratio of the polymer substrate (A): the copolymer (B) is 10:90-90: 10, optionally the mass ratio is 30:70.

Preparation of polymer electrolyte: The above obtained polymer film is immersed in a high-voltage-resistant electrolyte for 24 hours, wherein the electrolyte includes but is not limited to some commonly used high-voltage-resistant electrolytes (resistance above 4.5V).

In the above embodiments, the high-voltage-resistant electrolyte includes but is not limited to: 14% of lithium hexafluorophosphate (LiPF₆), 1% of lithium bis(fluorosulfonyl)imide (LiFSI), 0.8% of lithium difluorophosphate (LiPO₂F₂), 0.1% of lithium tetrafluoroborate (LiBF₄), 0.1% of vinylene carbonate (VC), 1% of 1,3-propane sultone (1,3-PS), 24.9% of ethylene carbonate (EC), 41.5% of ethyl methyl carbonate (EMC), and 16.6% of diethyl carbonate (DEC).

Some embodiments of the present disclosure also provide a secondary battery and an electrical device including the secondary battery, wherein the secondary battery includes a positive electrode sheet, a negative electrode sheet, and an electrolyte layer.

Preparation method of positive electrode sheet: A positive electrode active substance, a positive electrode conductive agent, and a positive electrode binder are dispersed in a solvent at a mass ratio of 95:2:3 to form a uniform positive electrode slurry. The positive electrode slurry is applied on a surface of a positive electrode current collector, and subjected to drying, cold pressing and other processes to form a positive electrode active substance layer on the positive electrode current collector to obtain the positive electrode sheet. A ratio of ingredients in the positive electrode slurry may be set according to conventional ratios, which is not limited herein. The positive electrode conductive agent is selected from one of carbon black, acetylene black, graphene, carbon nanotubes, carbon nanofibers, or a combination of two or more mixed in any ratio. The positive electrode binder is selected from one of PVDF and its derivatives. The positive electrode active substance may include one or more of lithium cobalt oxide (LCO), lithium nickel oxide (LNO), lithium manganese oxide (LMO), lithium nickel manganese oxide (LNMO), lithium nickel cobalt manganese oxide (NCM), lithium nickel cobalt aluminum oxide (NCA), and lithium-rich manganese-based oxide (LRMO). In some embodiments, the positive electrode current collector may be aluminum foil.

### Negative electrode sheet

The negative electrode sheet is selected from lithium metal of different thicknesses (such as lithium metal with thickness of 10µm to 600µm).

### Electrolyte layer

The above polymer electrolyte is directly used as the polymer electrolyte layer.

### Secondary battery

The positive electrode sheet, the electrolyte layer and the negative electrode sheet are placed into a mold in sequence for assembly. After assembly, a pressure is applied and a nut is tightened at the top of a column with a constant pressure to obtain the secondary battery.

Note: The assembly process is completed in a glove box under the argon atmosphere, and particle diameters of corresponding powders of the positive electrode sheet, the electrolyte layer and the negative electrode sheet are all kept consistent.

It should be noted that the lithium-ion secondary battery is prepared by the above method. However, the battery prepared by the present disclosure may also be a sodium-ion secondary battery or a potassium-ion secondary battery.

Those skilled in the art will understand that the battery preparation method described above is merely an example. Without departing from the content disclosed in the present disclosure, other methods commonly used in the art may be adopted.

The reagents and raw materials used in the present disclosure are all commercially available.

The present disclosure has no special requirements for the assembly method of the above battery, and assembly methods commonly known to those skilled in the art may be used. In addition, the above technical solution is not only applicable to commonly used all-solid-state lithium-ion batteries, but also applicable to various kinetic batteries such as all-solid-state sodium-ion batteries, all-solid-state potassium-ion batteries, etc. The above secondary battery may be applied to any suitable electrical devices, including but not limited to electric vehicles, etc.

Some specific examples and comparative examples are listed below to better illustrate the present disclosure.

### Example 1

### (1) Preparation of polymer electrolyte:

The polymer substrate (A) is polyvinylidene fluoride (PVDF).

The copolymer (B) was synthesized as follows. The acrylonitrile (AN), the lithium p-styrenesulfonate (LiSS) and the vinylene carbonate (VC) were mixed and dissolved in the solvent (the solvent may be DMSO, and the mass fraction of the polymer solution may be 10%), then 0.1wt% of azobisisobutyronitrile (AIBN) was dissolved in the mixture. The obtained solution was kept at 60°C for 15 hours under the argon atmosphere. The obtained solid was dissolved in anhydrous dimethyl sulfoxide and washed with toluene to remove residual monomers and the initiator to obtain the pure copolymer. The molar ratio of the monomers of the AN, the LiSS and the VC was 20:60:20.

The polymer substrate (A) was mixed with the copolymer (B) in the solvent. After sufficient heating and stirring to dissolve the mixture, the obtained solution was poured into a polytetrafluoroethylene mold and dried to obtain the polymer film. The mass ratio of the polymer substrate (A) to the copolymer (B) was 30:70.

The polymer film obtained above was immersed in a high-voltage-resistant electrolyte commonly used in the art for 24 hours to obtain the polymer electrolyte.

### (2) Positive electrode sheet

The positive electrode active substance was selected from lithium-rich manganese-based oxide (LRMO). The positive electrode conductive agent was selected from carbon black. The positive electrode binder was selected from PVDF. The positive electrode current collector was selected from aluminum foil.

### (3) Negative electrode sheet

The negative electrode sheet was selected from lithium metal with a thickness of 10µm.

### (4) Electrolyte layer

The above polymer electrolyte was directly used as the polymer electrolyte layer.

### (5) Secondary battery

The positive electrode sheet, the electrolyte layer and the negative electrode sheet were placed into the mold in sequence for assembly. After assembly, the pressure was applied to 100 MPa and the nut was tightened at the top of the column with the constant pressure to obtain the secondary battery.

Note: The assembly process was completed in the glove box under the argon atmosphere, and particle diameters of the corresponding powders of the positive electrode sheet, the electrolyte layer and the negative electrode sheet were all kept consistent.

### Example 2

The preparation method in Example 2 was the same as that in Example 1, except that the mass ratio of the polymer substrate (A) to the copolymer (B) in Example 2 was 10:90.

### Example 3

The preparation method in Example 3 was the same as that in Example 1, except that the mass ratio of the polymer substrate (A) to the copolymer (B) in Example 3 was 90:10.

### Example 4

The preparation method in Example 4 was the same as that in Example 1, except that the mass ratio of the polymer substrate (A) to the copolymer (B) in Example 4 was 50:50.

### Example 5

The preparation method in Example 5 was the same as that in Example 1, except that the mass ratio of the polymer substrate (A) to the copolymer (B) in Example 5 was 60:40.

### Example 6

The preparation method in Example 6 was the same as that in Example 1, except that the molar ratio of the monomers of the acrylonitrile (AN), the lithium p-styrenesulfonate (LiSS) and the vinylene carbonate (VC) in the copolymer (B) in Example 6 was 5:90:5.

### Example 7

The preparation method in Example 7 was the same as that in Example 1, except that the molar ratio of the monomers of the acrylonitrile (AN), the lithium p-styrenesulfonate (LiSS) and the vinylene carbonate (VC) in the copolymer (B) in Example 7 was 25:50:25.

### Example 8

The preparation method in Example 8 was the same as that in Example 1, except that the molar ratio of the monomers of the acrylonitrile (AN), the lithium p-styrenesulfonate (LiSS) and the vinylene carbonate (VC) in the copolymer (B) in Example 8 was 10:80:10.

### Example 9

The preparation method in Example 9 was the same as that in Example 1, except that the molar ratio of the monomers of the acrylonitrile (AN), the lithium p-styrenesulfonate (LiSS) and the vinylene carbonate (VC) in the copolymer (B) in Example 9 was 15:70:15.

### Example 10

The preparation method in Example 10 was the same as that in Example 1, except that the molar ratio of the monomers of the acrylonitrile (AN), the lithium p-styrenesulfonate (LiSS) and the vinylene carbonate (VC) in the copolymer (B) in Example 10 was 20:60:20.

### Example 11

The preparation method in Example 11 was the same as that in Example 1, except that the molar ratio of the monomers of the acrylonitrile (AN), the lithium p-styrenesulfonate (LiSS) and the vinylene carbonate (VC) in the copolymer (B) in Example 11 was 20:65:15.

### Example 12

The preparation method in Example 12 was the same as that in Example 1, except that the polymer substrate (A) in Example 12 was PVDF-HFP.

### Example 13

The preparation method in Example 13 was the same as that in Example 1, except that the polymer substrate (A) in Example 13 was PVDF-HFP-PTFE.

### Example 14

The preparation method in Example 14 was the same as that in Example 1, except that the polymer substrate (A) in Example 14 was polyimide (PI).

### Example 15

The preparation method in Example 15 was the same as that in Example 1, except that the polymer substrate (A) in Example 15 was polymethyl methacrylate (PMMA).

### Example 16

The preparation method in Example 16 was the same as that in Example 1, except that the polymer substrate (A) in Example 16 was a mixture of polyvinylidene fluoride (PVDF) and polyimide (PI) (in a mass ratio of 1:1).

### Comparative Example 1

The preparation method in Comparative Example 1 was the same as that in Example 1, except that the mass ratio of the polymer substrate (A) to the copolymer (B) in Comparative Example 1 was 5:95.

### Comparative Example 2

The preparation method in Comparative Example 2 was the same as that in Example 1, except that the mass ratio of the polymer substrate (A) to the copolymer (B) in Comparative Example 2 was 95:5.

### Comparative Example 3

The preparation method in Comparative Example 3 was the same as that in Example 1, except that Comparative Example 3 only contained the polymer substrate (A) and did not contain the copolymer (B).

### Comparative Example 4

The preparation method in Comparative Example 4 was the same as that in Example 1, except that Comparative Example 4 only contained the copolymer (B) and did not contain the polymer substrate (A).

### Comparative Example 5

The preparation method in Comparative Example 5 was the same as that in Example 1, except that the molar ratio of the monomers of the acrylonitrile (AN), the lithium p-styrenesulfonate (LiSS) and the vinylene carbonate (VC) in the copolymer (B) in Comparative Example 5 was 3:94:3.

### Comparative Example 6

The preparation method in Comparative Example 6 was the same as that in Example 1, except that the molar ratio of the monomers of the acrylonitrile (AN), the lithium p-styrenesulfonate (LiSS) and the vinylene carbonate (VC) in the copolymer (B) in Comparative Example 6 was 30:40:30.

### Comparative Example 7

The preparation method in Comparative Example 7 was the same as that in Example 1, except that the molar ratio of the monomers of the acrylonitrile (AN), the lithium p-styrenesulfonate (LiSS) and the vinylene carbonate (VC) in the copolymer (B) in Comparative Example 7 was 0:75:25.

### Comparative Example 8

The preparation method in Comparative Example 8 was the same as that in Example 1, except that the molar ratio of the monomers of the acrylonitrile (AN), the lithium p-styrenesulfonate (LiSS) and the vinylene carbonate (VC) in the copolymer (B) in Comparative Example 8 was 25:75:0.

### Comparative Example 9

The preparation method in Comparative Example 9 was the same as that in Example 1, except that the molar ratio of the monomers of the acrylonitrile (AN), the lithium p-styrenesulfonate (LiSS) and the vinylene carbonate (VC) in the copolymer (B) in Comparative Example 9 was 50:0:50.

### Comparative Example 10

The preparation method in Comparative Example 10 was the same as that in Example 1, except that the molar ratio of the monomers of the acrylonitrile (AN), the lithium p-styrenesulfonate (LiSS) and the vinylene carbonate (VC) in the copolymer (B) in Comparative Example 10 was 0:0: 100.

### Comparative Example 11

The preparation method in Comparative Example 11 was the same as that in Example 1, except that the molar ratio of the monomers of the acrylonitrile (AN), the lithium p-styrenesulfonate (LiSS) and the vinylene carbonate (VC) in the copolymer (B) in Comparative Example 11 was 0:100:0.

### Comparative Example 12

The preparation method in Comparative Example 12 was the same as that in Example 1, except that the molar ratio of the monomers of the acrylonitrile (AN), the lithium p-styrenesulfonate (LiSS) and the vinylene carbonate (VC) in the copolymer (B) in Comparative Example 12 was 100:0:0.

### Performance Test Method

At an environment of 25°C, the secondary batteries prepared in Examples 1-16 and Comparative Examples 1-12 were subjected to a long cycle charge-discharge test after capacity formation, and number of cycles of the secondary batteries mentioned above at room temperature were measured. The test conditions were set to conduct the long cycle charge-discharge test after battery capacity formation, during the test, the constant-capacity discharge specific capacity at the first cycle and number of cycles under room temperature when SOH is 50% were recorded. An operation voltage range was 1.9 V to 3.7 V. A capacity formation rate was 0.1 C. A roomtemperature cycle test rate was 0.3 C. In Example 4, the test method was the same as that in other examples and comparative examples, except that the operation voltage range was 1.4 V to 4.25 V.

Note: Examples that simultaneously satisfy the following conditions are considered to have good performance: The short-circuit time of Li/Li symmetric batteries under 1 mA/cm² is greater than 500 hours, number of cycles under room temperature at 80%SOH of LMR/Li batteries is greater than 300, and the 1C capacity is greater than 170 mAh/g.

The test results are shown in Table 1 below

**Table 1. Secondary battery performance test results of Examples 1-16 and Comparative Examples 1-12**

| Group | Mass ratio of A: B | Molar ratio of monomers of AN:LiSS:VC in B | Types of A | Short-circuit time (h) of Li/Li symmetric battery under 1mA/cm² | Number of cycles of LMR/Li battery under room temperature (80% SOH) | 1C capacity (mAh/g) |
|---|---|---|---|---|---|---|
| Example 1 | 30:70 | 20:60:20 | PVDF | 1088 | 509 | 190 |
| Example 2 | 10:90 | 20:60:20 | PVDF | 689 | 356 | 193 |
| Example 3 | 90:10 | 20:60:20 | PVDF | 1189 | 569 | 170 |
| Example 4 | 50:50 | 20:60:20 | PVDF | 1099 | 526 | 181 |
| Example 5 | 60:40 | 20:60:20 | PVDF | 1126 | 534 | 177 |
| Example 6 | 30:70 | 5:90:5 | PVDF | 809 | 402 | 195 |
| Example 7 | 30:70 | 25:50:25 | PVDF | 839 | 439 | 188 |
| Example 8 | 30:70 | 10:80:10 | PVDF | 903 | 476 | 193 |
| Example 9 | 30:70 | 15:70:15 | PVDF | 1038 | 471 | 189 |
| Example 10 | 30:70 | 20:60:20 | PVDF | 1054 | 489 | 190 |
| Example 11 | 30:70 | 20:65:15 | PVDF | 1044 | 456 | 192 |
| Example 12 | 30:70 | 20:60:20 | PVDF-HFP | 1078 | 518 | 191 |
| Example 13 | 30:70 | 20:60:20 | PVDF-HFP -PTFE | 1077 | 502 | 189 |
| Example 14 | 30:70 | 20:60:20 | PI | 1079 | 503 | 190 |
| Example 15 | 30:70 | 20:60:20 | PMMA | 1083 | 504 | 191 |
| Example 16 | 30:70 | 20:60:20 | PVDF+ PI (mass ratio 1:1) | 1075 | 500 | 188 |

(Continued below)
(Following the above)

| Group | Mass ratio of A: B | Molar ratio of monomers of AN:LiSS:VC in B | Types of A | Short-circuit time (h) of Li/Li symmetric battery under 1mA/cm² | Number of cycles of LMR/Li battery under room temperature (80% SOH) | 1C capacity (mAh/g) |
|---|---|---|---|---|---|---|
| Comparative Example 1 | 5:95 | 20:60:20 | PVDF | 409 | 267 | 193 |
| Comparative Example 2 | 95:5 | 20:60:20 | PVDF | 423 | 289 | 160 |
| Comparative Example 3 | 100:0 | 20:60:20 | PVDF | 398 | 278 | 155 |
| Comparative Example 4 | 0:100 | 20:60:20 | PVDF | 378 | 239 | 194 |
| Comparative Example 5 | 30:70 | 3:94:3 | PVDF | 554 | 267 | 196 |
| Comparative Example 6 | 30:70 | 30:40:30 | PVDF | 402 | 261 | 165 |
| Comparative Example 7 | 30:70 | 0:75:25 | PVDF | 990 | 98 | 191 |
| Comparative Example 8 | 30:70 | 25:75:0 | PVDF | 90 | 588 | 191 |
| Comparative Example 9 | 30:70 | 50:0:50 | PVDF | 590 | 309 | 160 |
| Comparative Example 10 | 30:70 | 0:0:100 | PVDF | 949 | 48 | 179 |
| Comparative Example 11 | 30:70 | 0:100:0 | PVDF | 109 | 56 | 194 |
| Comparative Example 12 | 30:70 | 100:0:0 | PVDF | 1001 | 97 | 178 |

Based on Examples 1-16, it may be observed that the present disclosure achieves structural design of the polymer electrolyte containing two types of polymers, specifically including the polymer substrate (A) and the copolymer (B), wherein the polymer substrate (A) includes the support material and provides the mechanical support, and the copolymer (B) contains cyano groups, ester groups, and sulfonic acid groups. In the present disclosure, the polymer substrate (A) serves as the support material to provide the mechanical strength, and the function of the copolymer (B) is to form stable interfaces with the positive electrodes and the negative electrodes. In view of the above, it may be obtained that the copolymer (B) is formed by copolymerization of three types of monomers, containing cyano groups, ester groups, and sulfonic acid groups respectively, all of which are polar groups that enable improvement of the mechanical properties of the electrolyte, while having the high reduction resistance and the oxidation resistance, thus enabling formation of the stable SEI film (solid electrolyte interface film) with the negative electrodes and formation of the stable CEI film (cathode electrolyte interface film) with the positive electrodes, as well as enabling simultaneous matching with lithium metal negative electrodes and lithium-rich manganese-based oxides. In this way, it is possible to prepare secondary batteries with the high energy density and able to operate cycles in the long term. Furthermore, the copolymer (B) is formed by copolymerization of the acrylonitrile (AN), the lithium p-styrenesulfonate (LiSS) and the vinylene carbonate (VC). The three copolymers respectively have different functions. The acrylonitrile (AN) has cyano group as polar functional group with the high voltage stability. The vinylene carbonate (VC) is stable with lithium metal and enables formation of the stable SEI. The lithium p-styrenesulfonate (LiSS) has the additional lithium-ion source, thus improving the capacity and rate performance of the battery.

Specifically, by comparing Examples 1-5 with Comparative Examples 1-4, it can be obtained that when the mass ratio of the polymer substrate (A) to the copolymer (B) is in the range of 10:90-90: 10. Optionally, when the mass ratio is 30:70, the polymer substrate (A) may serve as the support material to provide the mechanical strength, and the stable interface may be formed between the copolymer (B) and the positive electrodes and the negative electrodes, such that the prepared secondary battery has the good performance, has the high energy density and is able to operate cycles in the long term. Specifically, from Example 1, it can be observed that 30% of the polymer substrate (A) is sufficient to provide the mechanical properties, interfaces between the AN and the VC and the positive electrodes and the negative electrodes are both stable in 70% of the copolymer (B), and the contained LiSS provides additional kinetics, which is beneficial for capacity performance. From Example 2, it can be observed that when the content of the copolymer (B) is relatively high, the overall ionic conductivity of the electrolyte layer is very high, and the corresponding 1C capacity of the secondary battery is also high and may be up to 193 mAh/g. From Examples 3-5, it can be observed that when the content of the polymer substrate (A) is relatively high, the overall mechanical properties are very good, therefore the corresponding cycle stability of the secondary battery is good. From Comparative Examples 1 and 4, it can be observed that when the content of the polymer substrate (A) is too little, the mechanical properties are relatively poor, so the corresponding long-term cycle stability of the secondary battery is poor. From Comparative Examples 2 and 3, it can be observed that when the content of the copolymer (B) is too little, the interface stability thereof with both the positive electrodes and the negative electrodes is poor, and the conductivity is low, so the formed secondary battery has the poor long-term cycle stability and low capacity.

By comparing Examples 6-11 and Comparative Examples 5-12, it is known that the molar ratio of the monomers of the acrylonitrile (AN), the lithium p-styrenesulfonate (LiSS) and the vinylene carbonate (VC) in the copolymer (B) is 5-25:50-90:5-25. Optionally, the molar ratio is 20:60:20. Optionally, the molar ratio of the monomers of the acrylonitrile (AN) to the vinylene carbonate (VC) is equal. When the molar ratio is within this range, the ionic conductivity is high, the capacity is high, and the obtained secondary battery has excellent cycle stability and capacity. Specifically, from Examples 6 and 8, it can be observed that when the content of the lithium p-styrenesulfonate (LiSS) in copolymer (B) is high, the ionic conductivity is high, and the capacity of the corresponding secondary battery is relatively high and may be up to 195mAh/g. From Example 7 and Examples 9-10, it can be observed that when the content of the acrylonitrile (AN) and the vinylene carbonate (VC) in the copolymer (B) is high, the cycle stability of the corresponding secondary battery is better. From Example 11, it can be observed that when the molar ratio of the monomers of the acrylonitrile (AN) to the vinylene carbonate (VC) is not equal, although the performance of the corresponding secondary battery is improved, the improvement is limited. The reason is that, when the content of the acrylonitrile (AN) and the content of the vinylene carbonate (VC) are not equal, it might affect the stability balance between the positive electrodes and the negative electrodes of the corresponding secondary battery, which would affect the performance of the secondary battery. From Comparative Example 5, it can be observed that when the content of the AN and the VC in the copolymer (B) is too little, the interface stability with both the positive electrodes and the negative electrodes is poor, so the long-term cycle stability of the corresponding secondary battery is poor. From Comparative Example 6, it can be observed that when the content of the LiSS in the copolymer (B) is too little, the interface stability with both the positive electrodes and the negative electrodes is poor, so the long-term cycle stability of the secondary battery is poor. From Comparative Example 7, it can be observed that when the copolymer (B) does not contain the AN, the interface stability with the positive electrodes is very poor, so the long-term cycle stability of the secondary battery is poor. From Comparative Example 8, it can be observed that when the copolymer (B) does not contain the VC, the interface stability with the negative electrodes is very poor, so the long-term cycle stability of the secondary battery is poor. From Comparative Example 9, it can be observed that when the copolymer (B) does not contain the LiSS, the conductivity is low, so the capacity of the secondary battery is low. From Comparative Example 10, it can be observed that when the copolymer (B) does not contain the AN and the LiSS, the interface stability with the positive electrodes is poor, and the conductivity is also low, so the long-term cycle stability of the secondary battery is poor and the capacity is low. From Comparative Example 11, it can be observed that when the copolymer (B) does not contain the AN and the VC, the interface stability with both the positive electrodes and the negative electrodes is poor, so the long-term cycle stability of the secondary battery is poor. From Comparative Example 12, it can be observed that when the copolymer (B) does not contain the LiSS and the VC, the interface stability with the negative electrodes is poor, and the conductivity is also low, so the long-term cycle stability of the secondary battery is poor and the capacity is low.

From Examples 12 to 16, it can be observed that the polymer substrate (A) may be selected from any one or more of polyvinylidene fluoride (PVDF), vinylidene fluoride-hexafluoropropylene (PVDF-HFP), PVDF-HFP-PTFE (fluoro-rubber), polyimide (PI), and polymethyl methacrylate (PMMA), thereby enabling the formed secondary battery to have good cycle stability and capacity. In addition, PVDF-HFP has a similar performance to that of PVDF, and the formed secondary battery has an improved cycle stability and capacity.

## Claims

1. A polymer electrolyte, comprising:
a polymer substrate; and
a copolymer,
wherein the polymer substrate comprises a support material, and the copolymer contains cyano groups, ester groups and sulfonic acid groups.

2. The polymer electrolyte according to claim 1, wherein a mass ratio of the polymer substrate to the copolymer is in a range of 10:90 to 90: 10.

3. The polymer electrolyte according to claim 1, wherein a mass ratio of the polymer substrate to the copolymer is 30:70.

4. The polymer electrolyte according to claim 1, wherein the copolymer is formed by copolymerization of acrylonitrile (AN), lithium p-styrenesulfonate (LiSS) and vinylene carbonate (VC).

5. The polymer electrolyte according to claim 4, wherein a molar ratio of monomers of the acrylonitrile (AN), the lithium p-styrenesulfonate (LiSS) and the vinylene carbonate (VC) is 5-25:50-90:5-25.

6. The polymer electrolyte according to claim 5, wherein a molar ratio of the monomers of the acrylonitrile (AN) to the vinylene carbonate (VC) is equal.

7. The polymer electrolyte according to claim 5, wherein the molar ratio of the monomers of the acrylonitrile (AN), the lithium p-styrenesulfonate (LiSS) and the vinylene carbonate (VC) is 20:60:20.

8. The polymer electrolyte according to claim 1, wherein the polymer substrate is selected from any one or more of polyvinylidene fluoride (PVDF), vinylidene fluoride-hexafluoropropylene (PVDF-HFP), PVDF-HFP-PTFE (fluoro-rubber), polyimide (PI), and polymethyl methacrylate (PMMA).

9. A secondary battery, comprising a positive electrode sheet, a negative electrode sheet and an electrolyte layer, wherein the electrolyte layer comprises the polymer electrolyte according to any one of claims 1-8.

10. An electrical device, comprising the secondary battery according to claim 9.
